Europäisches Patentamt

European Patent Office

Office européen des brevets

(11) Numéro de publication : **0 419 307 B1**

(12) **FASCICULE DE BREVET EUROPEEN**

(45) Date de publication du fascicule du brevet :
27.10.93 Bulletin 93/43

(51) Int. Cl.⁵ : **C01B 33/34, B01J 29/28**

(21) Numéro de dépôt : **90402379.3**

(22) Date de dépôt : **28.08.90**

(54) **Zéolite de la famille de la mazzite, son procédé de synthèse et son utilisation comme catalyseur.**

(30) Priorité : **30.08.89 FR 8911383**

(43) Date de publication de la demande :
**27.03.91 Bulletin 91/13**

(45) Mention de la délivrance du brevet :
**27.10.93 Bulletin 93/43**

(84) Etats contractants désignés :
**BE DE GB IT NL**

(56) Documents cités :
**GB-A- 2 175 890**
**US-A- 3 849 463**
**J. CHEM. SOC. (A), 1970, pages 1470-1475, Letchworth, GB ; R. AIELLO et al.: "Hydrothermal chemistry of silicates. Part XIV. Zeolite crystallisation in presence of mixed bases"**
**J.F. COLE et al.: "Advances in Chemistry Series", vol. 121, (Molecular Sieves, International Conference, 3rd), 1973, pages 583-595, Washington, US**

(73) Titulaire : **SOCIETE NATIONALE ELF AQUITAINE**
**Tour Elf, 2, Place de la Coupole, La Défense 6**
**F-92400 Courbevoie (FR)**

(72) Inventeur : **Di Renzo, Francesco**
**314 rue d'Uppsala**
**F-34080 Montpellier (FR)**
Inventeur : **Fajula, François**
**5 Impasse des Garances**
**F-34820 Teyran (FR)**
Inventeur : **Figueras, François**
**612 rue Jussieu**
**F-34090 Montpellier (FR)**
Inventeur : **des Courières, Thierry**
**152 bld Yves Farge**
**F-69007 Lyon (FR)**

(74) Mandataire : **Boillot, Marc**
**SOCIETE NATIONALE ELF AQUITAINE**
**Division Propriété Industrielle Tour Elf**
**F-92078 Paris la Défense Cédex 45 (FR)**

Jouve, 18, rue Saint-Denis, 75001 PARIS

## Description

Cette invention concerne une zéolithe cristalline synthétique de type mazzite, son procédé de synthèse et son utilisation dans l'adsorption et comme catalyseur de transformation des hydrocarbures.

La zéolithe correspondant à la dénomination mazzite a été découverte en 1972 (GALLI et coll. Contr. Mineral. and Petrol $\underline{45}$ 99 (1974)) dans les basaltes du Mont Semiol, Loire, France. La structure de la mazzite (Rinaldi et coll. Acta Cryst. $\underline{B31}$ 1603 (1975)) est décrite par un assemblage de six colonnes de cages gmélinites, correspondant à deux faces hexagonales, 9 faces carrées et trois faces octogonales liées entre elles avec un décalage + 1/4.

Le réseau tridimensionel se caractérise par un système de trois canaux parallèles à l'axe cristallographique c :

a - des canaux quasi cylindriques délimités par des cycles à 12 tétraèdres dont le diamètre libre est de 0,75 - 0,8nm. Les parois de ces canaux sont tapissées d'échelles constituées alternativement des cycles à 4 tétraèdres des cages gmélinite et de cycles à 5 tétraèdres résultant de l'accrochage entre les colonnes.

b - des canaux secondaires, localisés entre les colonnes de cages gmélinites et constitués de cycles à 8 tétraèdres en configuration chaise très déformée, et

c - des canaux à l'intérieur des colonnes de cages, accessibles au travers de cycles à 6 tétraèdres.

Les zéolithes de type mazzite sont caractérisées par un diffractogramme de rayons X unique.

Les exemples les plus connus et les mieux caractérisés de ce type de zéolithe sont les zéolithes oméga et la ZSM-4. Ce sont des solides intéressants pour l'adsorption et la catalyse.

La synthèse de la zéolithe oméga est décrite dans les brevets américains 4 241 036 (UNION CARBIDE) et 4 091 007 (MOBIL OIL). Le brevet français 2 074 007 (MOBIL OIL) et le brevet britanique 1 297 256 (MOBIL OIL) décrivent la synthèse de la ZSM-4. Un solide isostructural de la zéolithe oméga, appelé LZ 202 est décrit dans la demande de brevet PCT WO 87/00158 (UNION CARBIDE).

La synthèse des zéolithes oméga et ZSM-4 est également décrite dans la littérature scientifique, par Aiello et coll. (J. Chem Soc. $\underline{A\ 1970}$ 1470), Dwyer et coll. (J. Catal $\underline{59}$ 263 (1979)), Cole et coll. (Adv.Chem. Ser.$\underline{121}$ 583 (1973)), Perrotta et coll. (J. Catal. $\underline{55}$ 240 (1978)), Araya et coll (Zeolites $\underline{4}$ 263 (1984)), Fajula et coll (Zeolites $\underline{7}$ 203 (1987)) et Nicolas et coll (Stud. Surf. Sci. Catal. $\underline{37}$ 115 (1987)).

Les zéolithes oméga et ZSM-4 sont préparées par cristallisation hydrothermique de gels alcalins réactifs d'aluminosilicates. A l'exception de celle décrite dans la demande de brevet WO 87/00158, toutes les synthèses sont effectuées en présence d'un agent organique, tel que le tétraméthylammonium (TMA), la pyrrolidine, la choline, le diazobicyclooctane ou la triéthylènediamine. Le TMA est l'agent organique le plus courant et le plus sélectif. Ces composés organiques sont utilisés tels quels ou sous forme d'hydroxyde ou de sel. L'addition de bases minérales est nécessaire pour atteindre le niveau d'alcalinité requis. Pour la synthèse de la zéolithe oméga et de la ZSM-4, la base minérale utilisée est l'hydroxyde de sodium. Le milieu réactionnel peut contenir du lithium mais ne tolère pas ou peu de potassium (Aiello et Coll. J. Chem. Soc. $\underline{A\ 1970}$ 1470 et Cole et coll. Adv. Chem.Ser. $\underline{121}$ 583 (1973)). En présence de potassium on obtient généralement l'offretite.

La formule générale des zéolithes synthétiques de type mazzite, dans leur forme brute de synthèse, peut s'écrire, en termes de moles d'oxydes :

$$1 \pm 0{,}5\ (M\frac{2}{n}O + A\frac{2}{m}O)\ ;\ Al_2O_3\ ;\ 3\text{-}20\ SiO_2\ ;\ 0\text{-}20H_2O$$

où M est un cation de valence n, en général le sodium et A un agent organique portant m charges positives.

Selon une particularité des aluminosilicates tels que les zéolithes, les cations et composés organiques incorporés au cours de la synthèse peuvent être éliminés et remplacés par d'autres cations. Ces opérations sont mêmes nécessaires pour libérer la porosité de la zéolithe et engendrer une activité catalytique.

Les agents organiques sont plus communéments éliminés par une calcination oxydante. Les cations M sont échangeables par d'autres cations en milieu aqueux suivant des méthodes bien connues. Pour la catalyse, les cations les plus utiles sont le proton ou des cations appartenant à la famille des terres rares.

Ces traitements d'échange induisent cependant une fragilisation de la charpente zéolithique, particulièrement au cours des opérations nécessitant l'emploi de températures élevées en présence de vapeur d'eau. Le phénomène de fragilisation est bien connu, il est dû à des réactions d'hydrolyse de liaisons Al-O-T, où T est un cation du réseau, généralement le silicium, catalysées par les protons présent dans le réseau pour équilibrer l'excès de charge négative associé à la présence d'aluminium. Au cours de traitements hydrothermiques prolongés, la structure de la zéolithe se dégrade progressivement pour ultimement s'amorphiser.

Le principal objet de cette invention est une zéolithe crystalline synthétique de type mazzite qui conserve sa cristallinité et ses caractéristiques de catalyse et d'adsorption après un traitement hydrothermique prolongé.

Le second objectif est une zéolithe crystalline de type mazzite dans laquelle une partie des cations minéraux incorporés au cours de la synthèse n'est pas échangeable.

EP 0 419 307 B1

L'invention concerne donc une nouvelle zéolithe cristalline synthétique de type mazzite dont
- la composition stoechiométique, exprimée en moles d'oxydes correspond à ,

$$1 \pm 0,5 \left[ (1-x) \left( M\frac{2}{n} + z\,A\frac{2}{m} \right) O + xK_2O \right] ;$$

$$Al_2O_3 ; ySiO_2 ; O\text{-}20H_2O$$

où M représente au moins un cation échangeable alcalin ou alcalinoterreux de valeur n, de préférence du sodium et du potassium ou un proton, A est un agent organique portant m charges positives de préférence l'ion tétraméthylammonium, x est la fraction de cations potassium non échangeables, allant de 0,1 à 0,8, de préférence de 0,2 à 0,5, y va de 3 à 20, de préférence de 4 à 10 et z est égal à un ou à zéro,
- le diagramme de diffraction des rayons X correspond à celui décrit dans le tableau 1
- la cristallinité et les capacités d'adsorption dans sa forme protonée sont préservées après traitement hydrothermique prolongé.

Nous avons dénommé cette nouvelle zéolithe de type mazzite, la MZ 34.

Les principaux pics du diagramme de diffraction des rayons X de la MZ 34 sont donnés dans le tableau 1.

TABLEAU 1

Diffractogramme de rayons X de la zéolithe MZ-34

| $d(10^{-1}nm)$ | $I/I_0 \times 100$ | hkl |
|---|---|---|
| 15,47 | 9 | 100 |
| 9,03 | 60 | 110 |
| 7,83 | 15 | 200 |
| 6,82 | 15 | 101 |
| 5,93 | 31 | 210 |
| 5,47 | 3 | 201 |
| 5,24 | 6 | 300 |
| 4,679 | 34 | 211 |
| 4,357 | 5 | 310 + 301 |
| 3,934 | 11 | 400 |
| 3,789 | 100 | 311 + 002 |
| 3,691 | 27 | 102 |
| 3,610 | 35 | 320 |
| 3,501 | 67 | 112 + 401 |
| 3,42 | 13 | 202 + 410 |
| 3,264 | 6 | 321 |
| 3,149 | 85 | 500 + 411 |
| 3,076 | 36 | 302 |
| 3,030 | 32 | 330 |
| 2,975 | 22 | 420 |
| 2,910 | 78 | 501 + 222 |
| 2,826 | 6 | 510 + 331 |
| 2,619 | 18 | 511 |

Le diffractogramme a été obtenu par la technique classique en utilisant la radiation K$_1$ du cuivre et un dé-

3

EP 0 419 307 B1

tecteur amplificateur. L'enregistrement des intensités des pics est effectué en fonction de la position de ceux-ci exprimée en 2 theta, où theta est l'angle de Bragg. A partir de ces données les intensités relatives I/Io, où I est l'intensité d'un pic donné et Io l'intensité du pic le plus important, et les distances réticulaires $d(10^{-1}nm)$ sont déterminées. Ces valeurs peuvent varier légèrement, en fonction de paramètres tels que le degré d'hydratation de la zéolithe, la température ou le type d'appareil utilisé, mais en règle générale, le diffractogramme de rayons X est une caractéristique du réseau cristallin de la zéolithe.

Dans les zéolithes de type oméga ou ZSM-4, les cations minéraux et organiques introduits lors des synthèses sont éliminables par des combinaisons de traitements thermiques oxydants et des étapes d'échange selon des techniques bien connues dans l'art. Celles-ci sont décrites par exemple dans les publications de Perrotta et coll. (J.Catal.55 240 (1978)), de Cole et coll. (Adv.Chem.Ser.121 583 (1973)) ou de Weeks et coll (J.Chem. Soc. Faraday Trans.I 72 575 (1976)).

Au contraire, la MZ-34 contient x ions potassium par aluminium, non échangeables par ces techniques.

Ainsi après transformation de la MZ-34 en sa forme protonée, celle-ci conserve toujours x ions potassium. Sa teneur en potassium ne diminue pas lors des traitements hydrothermiques.

La forme protonée de la MZ-34 est obtenue par décomposition thermique du cation organique, échange par un sel d'ammonium inorganique suivi de la décomposition thermique du sel d'ammonium.

On utilise en général le nitrate d'ammonium comme sel inorganique d'ammonium. L'échange nécessite un traitement au reflux d'environ 18 heures.

La décomposition thermique du cation organique et du sel d'ammonium a lieu par calcination à des températures de 500-600°C sous air pendant environ 5 heures.

La composition stoechiométrique de la forme protonée de la MZ-34, exprimée en moles d'oxydes correspond à ,

$1 \pm 0,5 [ (1-x) H + x K]_2O ; Al_2O_3 ; ySiO_2 ; O-20H_2O$

où x et y ont les significations précitées.

Le tableau 2 montre qu'après traitement à 750°C pendant 17 heures en présence de vapeur d'eau, le taux de potassium de la MZ-34 reste inchangé, tandis que le taux de potassium initialement faible de la zéolithe oméga diminue après le traitement hydrothermique de la forme acide.

Le taux résiduel de cations est déterminé par analyse chimique élémentaire.

Lorsque des ions potassium sont introduits dans une zéolithe oméga ou une ZSM-4, ils peuvent être ultérieurement échangés par le cation d'un sel quelconque. Ainsi une zéolithe oméga échangée avec 2% poids de potassium et traitée à reflux par une solution molaire de nitrate d'ammonium, ne retient après cet échange que 0,1% en poids de potassium.

La teneur en potassium d'une MZ-34 renfermant 2% de potassium reste inchangée après un tel traitement.

Cette différence peut être expliquée par la localisation du potassium dans les réseaux cristallins des zéolithes oméga et MZ-34. Cette localisation peut être déduite de la capacité d'adsorption des deux zéolithes.

4

## TABLEAU 2

### Propriétés des formes acides de la zéolithe oméga et de la MZ-34

| | OMEGA | | MZ-34 | |
|---|---|---|---|---|
| | Produit de départ | 17h.750°C 1,013 $10^5$Pa $H_2O$ | Produit de départ | 17h.750°C 1,013 $10^5$Pa $H_2O$ |
| Cristallinité | 100 | 0 | 100 | 75 |
| Cyclohexane adsorbé (ml.$g^{-1}$) | 0,08 | <0.005 | 0,08 | 0.06 |
| V de craquage de l'isoctane (1) mmoles/h/g | 750 | <10 | 700 | 650 |
| % poids K | 0,1 | <0,03 | 2 | 2 |

(1) 380°C, $vs = 11 \ h^{-1}$, 1,013 $10^5$Pa

Les ions potassium non-échangeables de la MZ-34 ne diminuent en rien sa capacité d'adsorption. Le MZ-34 dans sa forme protonée, renfermant 2% poids de potassium, adsorbe 8% poids de cyclohexane, 10 à 13% poids d'eau à 25°C et 1333,2Pa et 3 à 6% de 1,3,5-triméthylbenzène à 25°C et une pression de 2666,4Pa. Ces résultats prouvent que le diamètre libre des pores est d'au moins 0,75nm et correspond au volume vide calculé du grand canal (Breck et Grose Adv. Chem. Ser. 121 319 (1973)).

Au contraire une zéolithe oméga dans laquelle on introduit 2% en poids de potassium par échange ionique, voit dans les mêmes conditions de mesure, sa capacité d'adsorption se réduire. Ainsi la capacité d'adsorption du cyclohexane passe de 8% poids à 2 à 4%.

De par sa structure poreuse, seul le grand canal de la zéolithe est accessible aux hydrocarbures (Chauvin et coll. J.Catal.111 94(1988)). La procédure d'échange au potassium de la zéolithe oméga réduit la capacité d'adsorption indiquant que les ions introduits sont localisés dans le grand canal.

Par contre, dans la MZ-34, le volume du grand canal est entièrement libre. Sans vouloir être limité par des considérations théoriques, nous pensons que les ions potassium non échangeables de la MZ-34 sont situés à l'intérieur des cages gmelinites de la structure, d'où ils ne pourraient pas sortir en raison de leur taille. Nous rappelons que le rayon ionique du potassium anhydre est de 0,133nm comparé à 0,097nm pour le sodium. Par ailleurs ces cages gmelinites sont inaccessibles par les techniques classiques d'échange cationique.

Nous ne voulons pas être limités par cette explication mais nous pensons que la stabilité hydrothermique de la MZ-34 est dûe à la présence des ions potassium non-échangeables. En effet, l'amorphisation des zéolithes oméga ou ZSM-4 lors des traitements hydrothermiques résulte de réactions d'hydrolyse des liaisons Al - O - Si, favorisée par la présence des protons équilibrant la charge négative. Dans la MZ-34, les ions potassium non échangeables bloquent ce processus d'hydrolyse et de ce fait stabilisent le réseau tridimensionnel.

L'introduction d'ions potassium dans une zéolithe oméga ou ZSM-4 par échange ne produit pas d'effet de stabilisation. Ces ions potassium sont éliminés au cours du traitement hydrothermique.

Dans le tableau 2 nous comparons la stabilité hydrothermique d'une zéolithe oméga et d'une MZ-34 dans leur forme protonée.

Les formes protonées sont obtenues à partir des formes brutes de synthèse par calcination à 500°C sous air, échange pendant 18 heures à reflux par une solution molaire de nitrate d'ammonium suivi d'une deuxième calcination.

Les formes protonées sont soumises à un traitement hydrothermique consistant en un chauffage à 750°C pendant 17 heures sous $1,013\ 10^5Pa$ de vapeur d'eau.

Dans ces conditions la MZ-34 conserve 75% de sa cristallinité, tandis que la zéolithe oméga devient amorphe. La cristallinité est mesurée par diffraction des rayons X, en comparant le rapport entre les sommes des aires des pics de diffraction des zéolithes avant et après traitement hydrothermique.

Une autre preuve de la rétention de la cristallinité de la MZ-34 est sa capacité d'adsorption du cyclohexane qui demeure égale à au moins 75% de sa valeur initiale.

La zéolithe oméga et la MZ-34 ont une activité comparable dans la réaction de craquage de l'isooctane, à 380°C et sous pression atmosphérique. L'avantage essentiel de la MZ-34 réside toutefois dans son activité après le traitement hydrothermique, qui est de 80% environ de l'original, alors que la zéolithe oméga devient totalement inactive.

Cette invention concerne également la synthèse de la MZ-34.

Le procédé de synthèse comporte les étapes suivantes :

a) on prépare une solution alcaline, renfermant en général de la soude, de la potasse et un agent organique

b) on rajoute à la solution limpide, la source de silicium sous agitation constante et vigoureuse, et on maintient l'agitation en général pendant 5 à 100 heures jusqu'à l'obtention d'un mélange fluide et homogène. Cette opération est généralement réalisée à la température ambiante, mais on peut accélérer la dissolution de la source de silicium en maintenant l'ensemble à une température comprise entre 30 et 50°C

c) on laisse reposer la suspension alcaline de la source de silicium

d) on rajoute la source d'aluminium sous agitation vigoureuse, puis on amène rapidement le mélange à la température de cristallisation, qui est en général comprise entre 80 et 150°C. Cette température est maintenue jusqu'à la formation d'une phase cristallisée présentant la diffractogramme de rayons X présenté dans le tableau 1. Le temps de cristallisation varie en général entre 20 et 150 heures.

Les rapports molaires dans le gel de cristallisation sont résumés dans le tableau 3.

## TABLEAU 3

### Rapports molaires dans le gel de cristallisation pour la formation de la zéolithe MZ-34

| | Domaine large | Domaine préféré | Domaine particulièrement préféré |
|---|---|---|---|
| $SiO_2/Al_2O_3$ | 10-100 | 20-80 | 28-60 |
| $H_2O/Al_2O_3$ | 100-1000 | 500-2000 | 600-1300 |
| $OH^-/SiO_2$ | 0,2-1 | 0,5- 0,9 | 0,65-0,85 |
| Na/T.C. | 0,4- 0,9 | 0,4 -0,9 | 0,4 -0,9 |
| K/T.C. | 0,10-0,50 | 0,10-0,50 | 0,10-0,50 |
| TMA/T.C. | 0,02-0,2 | 0,02-0,2 | 0,05-0,15 |

T.C. : Na + K + TMA

Il est intéressant à remarquer qu'alors que la littérature nous apprend que les zéolithes de type oméga et ZSM-4 ne peuvent être obtenues en présence de quantités d'ions potassium supérieures à environ 10% du total des cations (Aiello et coll. J.Chem.Soc. A 1970 1470 et Cole et coll.Adv. Chem.Ser.121 583 (1973)), nous avons trouvé une méthode permettant de synthétiser une zéolithe de type mazzite, dans les milieux où les ions potassium peuvent représenter jusqu'à 50% des ions minéraux.

D'autre part, et sans vouloir être limités par cette explication, nous pensons que la formation de la MZ-34 est due en partie au fait que l'aluminium est introduit dans un mélange ou la source de silicium est pré-digérée, c'est-à-dire un milieu contenant des ions silicates organisés. En effet dans les procédés de synthèse décrits dans l'art antérieur, la source d'aluminium est généralement dissoute dans la source alcaline avant la silice. Si on applique cette méthodologie, même combinée avec les rapports stoechiométriques décrits dans le tableau 3 on forme l'offretite.

Les sources de silicium et d'aluminium peuvent être de toute nature. Parmi les sources de silicium nous mentionnons les silicates, les silices solides, des silices colloïdales et les sols et gels de silice. Comme source d'aluminium on peut citer les sels d'aluminium, l'aluminium métallique, les oxydes d'aluminium, les argiles et les zéolithes synthétiques et naturelles. Il est préférable d'utiliser une source d'aluminium peu soluble, comme un aluminosilicate cristallin synthétique ou naturel. Ce résultat pourrait confirmer l'hypothèse selon laquelle la formation de la MZ-34 est liée à une incorporation lente d'aluminium à des silicates dissous.

Parmi les agents organiques on utilise de préférence les ions tétraméthylammonium, introduits sous forme de leur hydroxyde ou de l'un de leurs sels.

La durée de la synthèse peut être raccourcie en employant des méthodes bien connues dans l'art, comme l'ensemencement ou le vieillissement. On entend par ensemencement, l'addition au mélange réactionnel de 1 à 20% de cristaux de zéolithe MZ-34, ou 1 à 30% en volume d'un gel de MZ-34 n'ayant pas encore commencé à cristalliser ou 1 à 30% des eaux-mères d'une synthèse précédente. Lorsque l'ensemencement a lieu avec un gel de MZ-34 n'ayant pas commencé à cristalliser, on peut utiliser un mélange réactionnel par ailleurs exempt d'ions tétraméthylammonium, comme décrit dans le brevet américain 3 947 482 de GRACE. Le vieillissement consiste à maintenir le mélange réactionnel à une température inférieure à la température de cristallisation pendant des périodes de 1 heure à 20 jours.

La forme protonique de la MZ-34 est un catalyseur très efficace pour divers procédés de conversion des hydrocarbures, tels que le craquage, l'isomérisation, l'alkylation, le reformage, la polymérisation ou le déparaffinage. Il est possible de remplacer une partie des protons par des cations à effet catalytique, comme par exemple des cations appartenant à la famille des terres rares.

L'activité catalytique de la MZ-34 est comparable à celle de la zéolithe oméga ou la ZSM-4, son avantage essentiel réside dans le maintien de cette activité lors des traitements hydrothermiques, même prolongés.

Les exemples suivants illustrent l'invention sans toutefois la limiter.

## EXEMPLE 1

Cet exemple décrit une méthode générale de synthèse de la zéolithe MZ-34 selon l'invention.

Dans un becher contenant 50ml d'eau désionisée on dissout 2,62g de soude (NaOH) en pastilles, 1,92g de potasse en pastilles (KOH à 85,5%) et 0,97g d'hydroxyde de tétraméthylammonium pentahydrate (TMAOH, $5H_2O$).

On ajoute ensuite à cette solution alcaline 8,10g de silice en poudre (Cecagel, 80,6% $SiO_2$, 19,4% $H_2O$) sous agitation vigoureuse. Après 10 heures et obtention d'un mélange fluide et homogène on rajoute la source d'aluminium sous forme de 1,85g de zéolithe de type Y ($Na_2O$ ; $Al_2O_3$ ; 4,6 $SiO_2$ ; 18,7 $H_2O$) et on agite pendant encore cinq heures. Le mélange a alors la composition globale suivante :

23(0,66 Na+0,29 K+0,05 TMA)$_2$O; $Al_2O_3$; 53 $SiO_2$; 1295 $H_2O$

Le mélange est transvasé dans un réacteur inox pourvu d'une agitation interne et est chauffé à 115°C pendant 24 heures avec une vitesse de rotation de l'agitateur de 140 tours/minute.

Les cristaux de MZ-34 ont été récupérés par filtration, lavés et séchés dans un four à 70°C sous atmosphère ambiante. Leur diffractogramme de rayons X est identique à celui reporté dans le tableau 1 et est caractéristique d'une zéolithe de type mazzite avec des paramètres structuraux a=1,821+0,001nm, c=0,7608+0,004nm et un volume de maille élémentaire de 218,27nm$^3$.

Sa composition en termes de moles d'oxydes telle que déterminée par analyse élémentaire est la suivante :

(0,3 Na+0,45 K+0,25 TMA)$_2$ O, $Al_2O_3$; 9,55 $SiO_2$; 6,5 $H_2O$

Ce Solide a été calciné à 550°C pendant 5 heures sous air pour décomposer les ions TMA, puis échangé trois fois dans une solution 1M de nitrate d'ammonium à reflux ($NH_4NO_3$) pour échanger les cations minéraux par des ions ammonium.

A l'issue du traitement, le solide a été analysé. Il contient alors 2% en poids de potassium indiquant que 55% des ions potassium initiaux ne sont pas échangeables.

A partir de ce solide échangé, un catalyseur acide a été préparé par décomposition thermique (500°C, 4 heures, 100ml/mn air) des ions ammoniums en protons. La composition du catalyseur en termes de moles d'oxydes est la suivante

(0,75 H+0,25 K)$_2$O, Al$_2$O$_3$, 9,55 SiO$_2$, 7,2 H$_2$O

Ce solide adsorbe 12,6 % en poids d'eau (1333,3 Pa 25°C) 6,2% en poids de cyclohexane et 4,5% en poids de mésitylène (2666,6 Pa 25°C). Appliqué comme catalyseur pour le craquage de l'isooctane (2,2,4-triméthylpentane) à 380°C, pression atmosphérique (1,013.10$^5$ Pa) et une vélocité spatiale (poids d'hydrocarbure/poids de catalyseur x temps en heures) de 11h$^-$ il conduit à une vitesse de craquage de 750 mmoles/h.g.

Le catalyseur a aussi été évalué après un traitement hydrothermique. Le traitement hydrothermique consiste en un chauffage à 750°C sous une pression de vapeur d'eau de 1,013.10$^5$ Pa pendant 17 heures. Après ce traitement il conserve 75% de sa cristallinité d'après la diffraction des rayons X, sa capacité d'adsorption du cyclohexane est de 5% en poids et son activité pour le craquage de l'isooctane de 650 mmoles/h.g suivant les conditions décrites plus haut.

## EXEMPLE 2

Cet exemple illustre la préparation de la zéolithe MZ-34 en présence d'un gel préalablement vieilli, avec un apport d'aluminium régulé.

i) On prépare un gel de stoechiométrie globale 4(0,8 Na+0,2 TMA)$_2$O, Al$_2$O$_3$, 9,2 SiO$_2$, 156 H$_2$O à partir de 160ml d'eau désionisée, 10,47g de NaOH en pastilles, 17,1g de TMAOH. 5H$_2$O, 35,2g de silice en poudre (silice non poreuse, 91,2% SiO$_2$, 8,8% H$_2$O) et 9,7g d'aluminate de sodium (NaAlO$_2$) en employant la procédure et l'ordre d'addition des réactifs décrits dans l'exemple 1. Après homogénéisation, le mélange est placé dans un flacon en polypropylène, scellé et maintenu dans un four à 50°C pendant 23 jours sans agitation.

ii) Un second mélange de composition :

4 Na$_2$O; K$_2$O; 15 SiO$_2$; 377,3 H$_2$O est préparé à partir de 360ml d'eau, 17,78g de NaOH, 7,25g de KOH à 85% et 60,1g de silice en poudre (Cecagel, 80,6% SiO$_2$, 19,4% H$_2$O).

Lorsque la silice a été digérée on rajoute à ce gel frais 90ml du gel vieilli décrit sous i). L'ensemble est transvasé dans un autoclave agité de 1 litre qui est amené à 115°C.

iii) Lorsque la température à l'intérieur de l'autoclave a atteint 115°C on rajoute au système, par le biais d'une pompe volumétrique, une solution alcaline d'aluminate de concentration 0,46 mole/l d'aluminate de sodium et 1,23 mole/l de potasse préparée à partir de 700ml d'eau, 26,2g de Na AlO$_2$ et 56,5g de KOH à 85%. Le débit de la pompe est fixé de façon à maintenir une concentration en aluminium en solution dans l'autoclave constante et égale à 3 mmoles/l.

La croissance des cristaux consommant de l'aluminium et la surface de croissance augmentant avec le temps, le débit de la pompe est régulièrement ajusté (entre 0,6ml/h au début de la réaction et 19,2ml/h en fin d'addition).

Après 33 heures, le solide formé est récupéré par filtration, lavé et séché à l'étuve. Son diffractogramme de rayons X est caractéristique de celui d'une zéolithe de type mazzite (Tableau 1) et sa composition chimique est la suivante :

(0,45 Na+0,30 K+0,25 TMA)$_2$O; Al$_2$O$_3$; 10,4 SiO$_2$; 13.4H$_2$O)

Après calcination pour éliminer les ions TMA et échange trois fois à reflux par une solution 1M de NH$_4$NO$_3$, la zéolithe contient un taux résiduel de sodium de 1,7% en poids, indiquant que 78% des ions potassium introduits au cours de la synthèse ne sont pas échangeables.

Cinq grammes de ce solide échangé ont été calcinés sous air à 500°C pour obtenir la forme protonique puis traités en présence de 1 atmosphère de vapeur d'eau à 750°C pendant 17 heures. Le solide traité hydrothermiquement a adsorbé 5,8% en poids de cyclohexane et 4% en poids de mésitylène. Sa cristallinité, évaluée à partir du diffractogramme de rayons X est de 78%.

## EXEMPLES 3 à 6

Exemples dans lesquels la procédure de l'exemple 1 a été suivie pour la préparation de la zéolithe MZ-34 mais où les proportions entre les réactifs utilisés ont été modifiées. (Dans le tableau résumant ces exemples T.C. signifie total cations et représente la somme Na+K+TMA).

| Exemple | $\dfrac{TC}{Al_2O_3}$ | $\dfrac{Na}{TC}$ | $\dfrac{K}{TC}$ | $\dfrac{TMA}{TC}$ | $\dfrac{SiO_2}{Al_2O_3}$ | $\dfrac{H_2O}{Al_2O_3}$ | $\dfrac{OH^-}{SiO_2}$ |
|---|---|---|---|---|---|---|---|
| 3 | 21,9 | 0,528 | 0,42 | 0,052 | 51,7 | 1261 | 0,81 |
| 4 | 11,6 | 0,562 | 0,39 | 0,05 | 29,7 | 625 | 0,77 |
| 5 | 20,2 | 0,714 | 0,233 | 0,052 | 51,3 | 1205 | 0,75 |
| 6 | 21,7 | 0,670 | 0,276 | 0,054 | 56,1 | 1247 | 0,70 |

Après 24 heures de réaction à 115°C les solides obtenus dans les exemples 3-6 présentent un diffractogramme de rayons X de zéolithe MZ-34 et contiennent de 1,3 à 2,2% en poids de potassium.

Les traitements ultérieurs de calcination + échange tels que décrits plus haut conduisent à des teneurs en potassium non échangeable de 1 à 1,8% en poids.

EXEMPLE 7 (comparatif)

Exemple montrant que l'utilisation des méthodes connues de l'art (addition de la source d'aluminium à la solution alcaline) et utilisation d'une source d'aluminium soluble (aluminate de sodium) conduit à l'offrétite et non à la MZ-34.

On prépare une solution alcaline contenant 50ml d'eau désionisée, 2,67g de NaOH, 1,96g de KOH à 85% et 1,022g de TMAOH, $5H_2O$ dans laquelle on dissout 0,525g d'aluminate de sodium. Après dissolution complète on rajoute 8,9g de silice en poudre (Cecagel, 80,6% $SiO_2$, 19,4% $H_2O$) sous agitation vigoureuse. Le mélange est transvasé dans un autoclave en acier, agité à une vitesse de 140 tours/minute et chauffé pendant 24 heures à 115°C.

La fraction solide est récupérée par filtration, lavée et séchée, son diffractogramme de rayons X correspond à celui de l'offretite :

Diffractogramme de rayons X de la zéolithe obtenue dans l'exemple 7 (comparatif)

| $d(10^{-1} nm)$ | $I/Io \times 100$ |
|---|---|
| 11,41 | 50 |
| 7,54 | 8 |
| 6,61 | 36 |
| 6,3 | 5 |
| 5,73 | 15 |
| 4,564 | 25 |
| 4,335 | 56 |
| 3,931 | 3 |
| 3,82 | 38 |
| 3,763 | 100 |
| 3,57 | 44 |
| 3,314 | 29 |
| 3,181 | 14 |
| 3,157 | 21 |
| 2,933 | 9 |
| 2,868 | 79 |
| 2,850 | 98 |
| 2,683 | 23 |
| 2,504 | 15 |
| 2,488 | 17 |
| 2,210 | 13 |
| 2,119 | 9 |
| 2,103 | 6 |
| 2,086 | 6 |

## Revendications

1. Nouvelle zéolithe synthétique de type mazzite dont - la composition stoechiométrique exprimée en moles d'oxydes correspond à :

$$1 \pm 0,5[(1-x) (M\frac{2}{n} + zA\frac{2}{m})O + x K_2O] , Al_2O_3, ySiO_2 ,0\text{-}20H_2O$$

où M représente au moins un cation échangeable alcalin ou alcalinoterreux de valeur n ou un proton, A est un agent organique portant m charges positives, x est la fraction de cations potassium non-échangeables, allant de 0,1 à 0,8, y va de 3 à 20 et z est égal à un ou zéro
- le diagramme de diffraction des rayons X correspond à celui décrit dans le tableau 1

## TABLEAU 1

| $d(10^{-1}nm)$ | $I/I_o \times 100$ | hkl |
|---|---|---|
| 15,47 | 9 | 100 |
| 9,03 | 60 | 110 |
| 7,83 | 15 | 200 |
| 6,82 | 15 | 101 |
| 5,93 | 31 | 210 |
| 5,47 | 3 | 201 |
| 5,24 | 6 | 300 |
| 4,679 | 34 | 211 |
| 4,357 | 5 | 310 + 301 |
| 3,934 | 11 | 400 |
| 3,789 | 100 | 311 + 002 |
| 3,691 | 27 | 102 |
| 3,610 | 35 | 320 |
| 3,501 | 67 | 112 + 401 |
| 3,42 | 13 | 202 + 410 |
| 3,264 | 6 | 321 |
| 3,149 | 85 | 500 + 411 |
| 3,076 | 36 | 302 |
| 3,030 | 32 | 330 |
| 2,975 | 22 | 420 |
| 2,910 | 78 | 501 + 222 |
| 2,826 | 6 | 510 + 331 |
| 2,619 | 18 | 511 |

2. Zéolithe selon la revendication 1 caractérisée en ce que x est compris entre 0,2 et 0,5.

3. Zéolithe selon les revendications 1 ou 2 carctérisée en ce que y est compris entre 4 et 10.

4. Zéolithe selon l'une des revendications 1 à 3 caractérisée en ce que A est l'ion tétraméthylammonium.

5. Zéolithe selon l'une des revendications 1 à 4 caractérisée en ce que M représente un mélange de sodium et de potassium.

6. Zéolithe selon l'une des revendication 1 à 3 caractérisée en ce que M représente un proton et z est égal a zéro.

7. Zéolithe selon la revendication 6 caractérisée en ce qu'elle conserve au moins 75% de sa cristallinité après chauffage à 750°C pendant 17 heures sous $1,013.10^5$ Pa de vapeur d'eau.

8. Procédé de synthèse d'une zéolithe synthétique de type mazzite dont
   - la composition stoechiométrique exprimée en mole d'oxydes correspond à :

   $$1\pm0,5[(1-x)(M\frac{2}{n}+A\frac{2}{m})O + x\,K_2O]\,,Al_2O_3,\ ySiO_2,0\text{-}2OH_2O$$

   où M représente au moins un cation échangeable alcalin ou alcalinoterreux de valeur n, A est un agent organique portant m charges positives, x est la fraction de cations potassium non-échangeables, al-

11

lant de 0,1 à 0,8, et de préférence de 0,2 à 0,5, y va de 3 à 20 et de préférence de 4 et 10, et
- le diagramme de diffraction des rayons X correspond à celui décrit dans le tableau 1

## TABLEAU 1

| $d(10^{-1} nm)$ | $I/I_o \times 100$ | hkl |
|---|---|---|
| 15,47 | 9 | 100 |
| 9,03 | 60 | 110 |
| 7,83 | 15 | 200 |
| 6,82 | 15 | 101 |
| 5,93 | 31 | 210 |
| 5,47 | 3 | 201 |
| 5,24 | 6 | 300 |
| 4,679 | 34 | 211 |
| 4,357 | 5 | 310 + 301 |
| 3,934 | 11 | 400 |
| 3,789 | 100 | 311 + 002 |
| 3,691 | 27 | 102 |
| 3,610 | 35 | 320 |
| 3,501 | 67 | 112 + 401 |
| 3,42 | 13 | 202 + 410 |
| 3,264 | 6 | 321 |
| 3,149 | 85 | 500 + 411 |
| 3,076 | 36 | 302 |
| 3,030 | 32 | 330 |
| 2,975 | 22 | 420 |
| 2,910 | 78 | 501 + 222 |
| 2,826 | 6 | 510 + 331 |
| 2,619 | 18 | 511 |

lequel procédé comprend les étapes suivantes :
- préparation d'une solution alcaline de soude, de potasse et d'un agent organique
- ajout d'une source de silicium sous agitation, maintenue jusqu'à obtention d'un mélange fluide et homogène
- repos de ce mélange
- ajout de la source d'aluminium sous agitation, pour obtenir le gel de cristallisation
- chauffage de ce gel à la température de cristallisation et maintien à cette température jusqu'à la formation d'une phase cristallisée.

9. Procédé selon la revendication 8 caractérisé en ce que les rapports molaires des constituants du gel de cristallisation correspondent à ceux du tableau 3:

### TABLEAU 3

| | Domaine large | Domaine préféré | Domaine particulièrement préféré |
|---|---|---|---|
| $SiO_2/Al_2O_3$ | 10-100 | 20-80 | 28-60 |
| $H_2O/Al_2O_3$ | 100-1000 | 500-2000 | 600-1300 |
| $OH^-/SiO_2$ | 0,2-1 | 0,5- 0,9 | 0,65-0,85 |
| Na/T.C. | 0,4- 0,9 | 0,4 -0,9 | 0,4 -0,9 |
| K/T.C. | 0,10-0,50 | 0,10-0,50 | 0,10-0,50 |
| TMA/T.C. | 0,02-0,2 | 0,02-0,2 | 0,05-0,15 |

T.C. : Na + K + TMA

**10.** Procédé selon les revendications 8 ou 9 caractérisé en ce que l'agent organique est l'hydroxyde ou un sel de l'ion tétraméthylammonium.

**11.** Procédé selon l'une des revendications 8 à 10 caractérisé en ce que la source de silicium est choisi parmi un silicate, les silices solides, les silices colloïdales et les sols et gels de silice.

**12.** Procédé selon l'une des revendications 8 à 11 caractérisé en ce que la source d'aluminium est choisi parmi les sels d'aluminium, l'aluminium métallique, les oxydes d'aluminium, les argiles et les zéolithes synthétiques ou naturelles.

**13.** Procédé selon l'une des revendications 8 à 12 caractérisé en ce que la phase cristallisée est calcinée à l'air pour former une zéolithe synthétique de type mazzite dont
   - la composition stoéchiométrique exprimée en moles d'oxydes correspond à :

   $$1\pm0,5[(1-x)M\frac{2}{n}O + x\ K_2O]\ ,Al_2O_3,\ ySiO_2,O-20H_2O$$

   où M représente au moins un cation échangeable alcalin ou alcalinoterreux de valeur n, x va de 0,1 à 0,8, et de préférence de 0,2 à 0,5, y va de 3 à 20 et de préférence de 4 à 10.
   - le diagramme de diffraction des rayons X correspond à celui décrit dans le tableau 1

TABLEAU 1

| $d(10^{-1}nm)$ | $I/I_o x100$ | hkl |
|---|---|---|
| 15,47 | 9 | 100 |
| 9,03 | 60 | 110 |
| 7,83 | 15 | 200 |
| 6,82 | 15 | 101 |
| 5,93 | 31 | 210 |
| 5,47 | 3 | 201 |
| 5,24 | 6 | 300 |
| 4,679 | 34 | 211 |
| 4,357 | 5 | 310 + 301 |
| 3,934 | 11 | 400 |
| 3,789 | 100 | 311 + 002 |
| 3,691 | 27 | 102 |
| 3,610 | 35 | 320 |
| 3,501 | 67 | 112 + 401 |
| 3,42 | 13 | 202 + 410 |
| 3,264 | 6 | 321 |
| 3,149 | 85 | 500 + 411 |
| 3,076 | 36 | 302 |
| 3,030 | 32 | 330 |
| 2,975 | 22 | 420 |
| 2,910 | 78 | 501 + 222 |
| 2,826 | 6 | 510 + 331 |
| 2,619 | 18 | 511 |

14. Procédé suivant la revendication 13 caractérisé en ce que la phase cristallisée calcinée est échangée par un sel d'ammonium inorganique et de nouveau calcinée pour former une zéolithe synthétique de type mazzite dont

- la composition stoéchiométrique exprimée en moles d'oxydes correspond à :
  $1\pm0,5[(1-x)H + x\,K]_2O\,,Al_2O_3,\,ySiO_2,O-2OH_2O$
  où x va de 0,1 à 0,8, et de préférence de 0,2 à 0,5, y va de 3 à 20, et de préférence de 4 à 10 et
- le diagramme de diffraction des rayons X correspond à celui décrit dans le tableau 1

## TABLEAU 1

| $d(10^{-1}nm)$ | $I/I_o \times 100$ | hkl |
|---|---|---|
| 15,47 | 9 | 100 |
| 9,03 | 60 | 110 |
| 7,83 | 15 | 200 |
| 6,82 | 15 | 101 |
| 5,93 | 31 | 210 |
| 5,47 | 3 | 201 |
| 5,24 | 6 | 300 |
| 4,679 | 34 | 211 |
| 4,357 | 5 | 310 + 301 |
| 3,934 | 11 | 400 |
| 3,789 | 100 | 311 + 002 |
| 3,691 | 27 | 102 |
| 3,610 | 35 | 320 |
| 3,501 | 67 | 112 + 401 |
| 3,42 | 13 | 202 + 410 |
| 3,264 | 6 | 321 |
| 3,149 | 85 | 500 + 411 |
| 3,076 | 36 | 302 |
| 3,030 | 32 | 330 |
| 2,975 | 22 | 420 |
| 2,910 | 78 | 501 + 222 |
| 2,826 | 6 | 510 + 331 |
| 2,619 | 18 | 511 |

15. Procédé selon la revendication 14 caractérisé en ce que le sel d'ammonium inorganique est le nitrate d'ammonium.

16. Procédé selon l'une des revendications 13 à 15 caractérisé en ce que les calcinations ont lieu par chauffage sous air, à 500-600°C pendant environ 5 heures.

17. Utilisation d'une zéolithe selon la revendication 6 dans les procédés de conversion des hydrocarbures, tels que le craquage, l'isomérisation, l'alkylation, le reformage, la polymérisation, le déparaffinage ou l'hydratation.

## Claims

1. Novel synthetic zeolite of the mazzite type of which:
   - the stoichiometric composition expressed in moles of oxides corresponds to:

   $1 \pm 0,5[(1-x)(M\frac{2}{n} + zA\frac{2}{m})O + x\ K_2O]\ ,Al_2O_3,\ ySiO_2,0\text{-}2OH_2O$

   where M represents at least one exchangeable alkali or alkaline-earth cation of value n, or a proton, A is an organic agent carrying m positive charges, x is the fraction of non-exchangeable potassium cations and is from 0.1 to 0.8, y is from 3 to 20 and z is equal to one or zero,

15

- the X-ray diffraction pattern corresponds to that described in Table 1:

TABLE 1

| $d(10^{-1}nm)$ | $I/I_o \times 100$ | hkl |
|---|---|---|
| 15.47 | 9 | 100 |
| 9.03 | 60 | 110 |
| 7.83 | 15 | 200 |
| 6.82 | 15 | 101 |
| 5.93 | 31 | 210 |
| 5.47 | 3 | 201 |
| 5.24 | 6 | 300 |
| 4.679 | 34 | 211 |
| 4.357 | 5 | 310 + 301 |
| 3.934 | 11 | 400 |
| 3.789 | 100 | 311 + 002 |
| 3.691 | 27 | 102 |
| 3.610 | 35 | 320 |
| 3.501 | 67 | 112 + 401 |
| 3.42 | 13 | 202 + 410 |
| 3.264 | 6 | 321 |
| 3.149 | 85 | 500 + 411 |
| 3.076 | 36 | 302 |
| 3.030 | 32 | 330 |
| 2.975 | 22 | 420 |
| 2.910 | 78 | 501 + 222 |
| 2.826 | 6 | 501 + 331 |
| 2.619 | 18 | 511 |

2. Zeolite according to Claim 1, characterized in that x is between 0.2 and 0.5.

3. Zeolite according to Claim 1 or Claim 2, characterized in that y is between 4 and 10.

4. Zeolite according to one of Claims 1 to 3, characterized in that A is the tetramethylammonium ion.

5. Zeolite according to any one of Claims 1 to 4, characterized in that M represents a mixture of sodium and potassium.

6. Zeolite according to any one of Claims 1 to 3, characterized in that M represents a proton and z is zero.

7. Zeolite according to Claim 6, characterized in that it retains at least 75% of its crystallinity after heating to 750°C for 17 hours under water vapour at $1.013 \times 10^5$ Pa.

8. Method of synthesizing a synthetic zeolite of the mazzite type of which:
   - the stoichiometric composition expressed in moles of oxides corresponds to:

   $$1 \pm 0.5[(1-x)(M\frac{2}{n}+A\frac{2}{m})O + x\ K_2O]\ , Al_2O_3,\ ySiO_2, 0\text{-}2OH_2O$$

   where M represents at least one exchangeable alkali or alkaline-earth cation of value n, A is an organic agent carrying m positive charges, x is the fraction of non-exchangeable potassium cations and is from 0.1 to 0.8, preferably from 0.2 to 0.5, y is from 3 to 20, and preferably from 4 to 10, and
   - the X-ray diffraction pattern corresponds to that described in Table 1:

17

## TABLE 1

| $D(10^{-1}nm)$ | $I/I_O \times 100$ | hkl |
|---|---|---|
| 15.47 | 9 | 100 |
| 9.03 | 60 | 110 |
| 7.83 | 15 | 200 |
| 6.82 | 15 | 101 |
| 5.93 | 31 | 210 |
| 5.47 | 3 | 201 |
| 5.24 | 6 | 300 |
| 4.679 | 34 | 211 |
| 4.357 | 5 | 310 + 301 |
| 3.934 | 11 | 400 |
| 3.789 | 100 | 311 + 002 |
| 3.691 | 27 | 102 |
| 3.610 | 35 | 320 |
| 3.501 | 67 | 112 + 401 |
| 3.42 | 13 | 202 + 410 |
| 3.264 | 6 | 321 |
| 3.149 | 85 | 500 + 411 |
| 3.076 | 36 | 302 |
| 3.030 | 32 | 330 |
| 2.975 | 22 | 420 |
| 2.910 | 78 | 501 + 222 |
| 2.826 | 6 | 501 + 331 |
| 2.619 | 18 | 511 |

the method comprising the following steps:
- preparing an alkaline solution of sodium carbonate, potassium carbonate, and an organic agent;
- adding a source of silicon with stirring which is continued until a fluid and homogeneous mixture is obtained;
- resting the mixture;

- adding a source of aluminium with stirring to obtain the crystallization gel;
- heating the gel to the crystallization temperature and keeping it at that temperature until a crystallized phase is formed.

9. Method according to Claim 8, characterized in that the molar ratios of the constitutents of the crystallization gel correspond to those of Table 3:

## TABLE 3

|  | Wide Range | Preferred Range | Particularly preferred Range |
|---|---|---|---|
| $SiO_2/Al_2O_3$ | 10-100 | 20-80 | 28-60 |
| $H_2O/Al_2O_3$ | 100-1000 | 500-2000 | 600-1300 |
| $OH^-/SiO_2$ | 0.2-1 | 0.5-0.9 | 0.65-0.85 |
| Na/T.C. | 0.4-0.9 | 0.4-0.9 | 0.4-0.9 |
| K/T.C. | 0.10-0.50 | 0.10-0.50 | 0.10-0.50 |
| TMA/T.C. | 0.02-0.2 | 0.02-0.2 | 0.05-0.15 |

T.C. : Na + K + TMA

10. Method according to Claim 8 or Claim 9, characterized in that the organic agent is the hydroxide or a salt of the tetramethylammonium ion.

11. Method according to any one of Claims 8 to 10, characterized in that the source of silicon is selected from a silicate, solid silicas, colloidal silicas and silica sols and gels.

12. Method according to one of Claims 8 to 11, characterized in that the source of aluminium is selected from aluminium salts, metallic aluminium, aluminium oxides, and synthetic or natural zeolites and clays.

13. Method according to any one of Claims 8 to 12, characterized in that the crystallized phase is calcined in air to form a synthetic zeolite of the mazzite type of which:
- the stoichiometric composition expressed in moles of oxides corresponds to:

$$1\pm0,5[(1-x)(M\frac{2}{n} O + x K_2O] ,Al_2O_3, ySiO_2,O-20H_2O$$

where M represents at least one exchangeable alkali or alkaline-earth cation of value n, x is from 0.1 to 0.8 and preferably from 0.2 to 0.5, y is from 3 to 20 and preferably from 4 to 10,
- the X-ray diffraction pattern corresponds to that described in Table 1:

## TABLE 1

| D($10^{-1}$nm) | I/I$_o$x100 | hkl |
|---|---|---|
| 15.47 | 9 | 100 |
| 9.03 | 60 | 110 |
| 7.83 | 15 | 200 |
| 6.82 | 15 | 101 |
| 5.93 | 31 | 210 |
| 5.47 | 3 | 201 |
| 5.24 | 6 | 300 |
| 4.679 | 34 | 211 |
| 4.357 | 5 | 310 + 301 |
| 3.934 | 11 | 400 |
| 3.789 | 100 | 311 + 002 |
| 3.691 | 27 | 102 |
| 3.610 | 35 | 320 |
| 3.501 | 67 | 112 + 401 |
| 3.42 | 13 | 202 + 410 |
| 3.264 | 6 | 321 |
| 3.149 | 85 | 500 + 411 |
| 3.076 | 36 | 302 |
| 3.030 | 32 | 330 |
| 2.975 | 22 | 420 |
| 2.910 | 78 | 501 + 222 |
| 2.826 | 6 | 501 + 331 |
| 2.619 | 18 | 511 |

**14.** Method according to Claim 13, characterized in that the calcined crystallized phase is exchanged by means of an inorganic ammonium salt and calcined again to form a synthetic zeolite of the mazzite type of which:
- the stoichiometric composition expressed in moles of oxides corresponds to:
$1\pm0,5[(1-x)H + x K]_2O$ ,$Al_2O_3$, $ySiO_2$,$O-2OH_2O$

where x is from 0.1 to 0.8, preferably from 0.2 to 0.5, y is from 3 to 20 and preferably from 4 to 10, and

- the X-ray diffraction pattern corresponds to that described in Table 1:

## TABLE 1

| $D(10^{-1}nm)$ | $I/I_O x100$ | hkl |
|---|---|---|
| 15.47 | 9 | 100 |
| 9.03 | 60 | 110 |
| 7.83 | 15 | 200 |
| 6.82 | 15 | 101 |
| 5.93 | 31 | 210 |
| 5.47 | 3 | 201 |
| 5.24 | 6 | 300 |
| 4.679 | 34 | 211 |
| 4.357 | 5 | 310 + 301 |
| 3.934 | 11 | 400 |
| 3.789 | 100 | 311 + 002 |
| 3.691 | 27 | 102 |
| 3.610 | 35 | 320 |
| 3.501 | 67 | 112 + 401 |
| 3.42 | 13 | 202 + 410 |
| 3.264 | 6 | 321 |
| 3.149 | 85 | 500 + 411 |
| 3.076 | 36 | 302 |
| 3.030 | 32 | 330 |
| 2.975 | 22 | 420 |
| 2.910 | 78 | 501 + 222 |
| 2.826 | 6 | 501 + 331 |
| 2.619 | 18 | 511 |

15. Method according to Claim 14, characterized in that the inorganic ammonium salt is ammonium nitrate.

16. Method according to any one of Claims 13 to 15, characterized in that the calcinations take place by heating in air to 500-600°C for about 5 hours.

17. Use of a zeolite according to Claim 6 in hydrocarbon-conversion processes, such as cracking, isomerisation, alkylation, reforming, polymerisation, paraffin extraction, or hydration.

**Patentansprüche**

1. Neuer synthetischer Zeolith vom Mazzittyp, der folgende stöchiometrische Zusammensetzung, ausgedrückt in Molen Oxide, aufweist:

$$1\pm0,5[(1-x)(M\frac{2}{n} + zA\frac{2}{m})0 + x\ K_2O]\ ,Al_2O_3,\ ySiO_2,0\text{-}20H_2O$$

worin M wenigstens ein austauschbares Alkali- oder Erdalkalikation mit dem Wert n oder ein Proton darstellt, A einen m positive Ladungen aufweisenden organischen Stoff, x die Fraktion nicht austauschbarer Kaliumkationen von 0,1 bis 0,8 darstellen und y 3 bis 20 und z 1 oder 0 bedeuten, wobei das Röntgenbeugungsdiagramm die in Tabelle 1 aufgeführten Werte aufweist:

## TABELLE 1

| $d(10^{-1}nm)$ | $I/I_o\text{x}100$ | hkl |
|---|---|---|
| 15,47 | 9 | 100 |
| 9,03 | 60 | 110 |
| 7,83 | 15 | 200 |
| 6,82 | 15 | 101 |
| 5,93 | 31 | 210 |
| 5,47 | 3 | 201 |
| 5,24 | 6 | 300 |
| 4,679 | 34 | 211 |
| 4,357 | 5 | 310 + 301 |
| 3,934 | 11 | 400 |
| 3,789 | 100 | 311 + 002 |
| 3,691 | 27 | 102 |
| 3,610 | 35 | 320 |

Tabelle 1 (Fortsetzung)

| | | |
|---|---|---|
| 3,501 | 67 | 112 + 401 |
| 3,42 | 13 | 202 + 410 |
| 3,264 | 6 | 321 |
| 3,149 | 85 | 500 + 411 |
| 3,076 | 36 | 302 |
| 3,030 | 32 | 330 |
| 2,975 | 22 | 420 |
| 2,910 | 78 | 501 + 222 |
| 2,826 | 6 | 510 + 331 |
| 2,619 | 18 | 511 |

2. Zeolith nach Anspruch 1, dadurch **gekennzeichnet**, daß x einen Wert zwischen 0,2 und 0,5 aufweist.

3. Zeolith nach einem der Ansprüche 1 oder 2, dadurch **gekennzeichnet**, daß y einen Wert zwischen 4 und 10 aufweist.

4. Zeolith nach einem der Ansprüche 1 bis 3, dadurch **gekennzeichnet**, daß A das Tetramethylammonium-Ion ist.

5. Zeolith nach einem der Ansprüche 1 bis 4, dadurch **gekennzeichnet**, daß M ein Gemisch aus Natrium und Kalium darstellt.

6. Zeolith nach einem der Ansprüche 1 bis 3, dadurch **gekennzeichnet**, daß M ein Proton und z 0 ist.

7. Zeolith nach Anspruch 6, dadurch **gekennzeichnet**, daß er nach Erwärmen auf 750°C während 17 Stunden unter einem Wasserdampfdruck von $1,013.10^5$ Pa wenigstens 75 % seiner Kristallinität bewahrt hat.

8. Verfahren zur Synthese eines synthetischen Zeoliths vom Mazzittyp, der folgende stöchiometrische Zusammensetzung, ausgedrückt in Molen Oxide, aufweist:

$$1 \pm 0,5[(1-x)(M\frac{2}{n}+A\frac{2}{m})O + x\ K_2O]\ ,Al_2O_3,\ ySiO_2,0\text{-}20H_2O$$

worin M wenigstens ein austauschbares Alkali- oder Erdalkalikation mit dem Wert n oder ein Proton darstellt, A einen m positive Ladungen aufweisenden organischen Stoff, x die Fraktion nicht austauschbarer Kaliumkationen von 0,1 bis 0,8, vorzugsweise 0,2 bis 0,5, y 3 bis 20, vorzugsweise 4 bis 10 bedeuten, wobei das Röntgenbeugungsdiagramm die in Tabelle 1 aufgeführten Werte aufweist:

## TABELLE 1

| d($10^{-1}$nm) | I/I$_o$x100 | hkl |
| --- | --- | --- |
| 15,47 | 9 | 100 |
| 9,03 | 60 | 110 |
| 7,83 | 15 | 200 |
| 6,82 | 15 | 101 |
| 5,93 | 31 | 210 |
| 5,47 | 3 | 201 |
| 5,24 | 6 | 300 |
| 4,679 | 34 | 211 |
| 4,357 | 5 | 310 + 301 |
| 3,934 | 11 | 400 |
| 3,789 | 100 | 311 + 002 |
| 3,691 | 27 | 102 |
| 3,610 | 35 | 320 |
| 3,501 | 67 | 112 + 401 |
| 3,42 | 13 | 202 + 410 |
| 3,264 | 6 | 321 |
| 3,149 | 85 | 500 + 411 |
| 3,076 | 36 | 302 |
| 3,030 | 32 | 330 |

Tabelle 1 (Fortsetzung)

| | | |
| --- | --- | --- |
| 2,975 | 22 | 420 |
| 2,910 | 78 | 501 + 222 |
| 2,826 | 6 | 510 + 331 |
| 2,619 | 18 | 511 |

wobei das Verfahren folgende Stufen umfaßt:
a) Herstellung einer alkalischen Lösung aus Ätznatron, Ätzkali und einem organischen Stoff.
b) Zugabe einer Siliziumquelle unter Rühren bis zur Erzielung eines flüssigen homogenen Gemisches,
c) Stehenlassen des Gemisches,
d) Zugabe der Aluminiumquelle unter Rühren zur Erzielung eines Kristallisationsgels und
e) Erwärmung des Gels auf die Kristallisationstemperatur und Halten bei dieser Temperatur bis zur Bildung einer kristallisierten Phase.

9. Verfahren nach Anspruch 8, dadurch **gekennzeichnet**, daß die Molverhältnisse der Komponenten des Kristallisationsgels Tabelle 3 entsprechen:

## TABELLE 3

|  | breiter Bereich | bevorzugter Bereich | besonders bevorzugter Bereich |
|---|---|---|---|
| $SiO_2/Al_2O_3$ | 10-100 | 20-80 | 28-60 |
| $H_2O/Al_2O_3$ | 100-1000 | 500-2000 | 600-1300 |
| $OH^-/SiO_2$ | 0,2-1 | 0,5-0,9 | 0,65-0,85 |
| Na/T.C. | 0,4-0,9 | 0,4-0,9 | 0,4-0,9 |

Tabelle 3 (Fortsetzung)

| K/T.C. | 0,10-0,50 | 0,10-0,50 | 0,10-0,50 |
|---|---|---|---|
| TMA/T.c. | 0,02-0,2 | 0,02-0,2 | 0,05-0,15 |

T.C.: Na + K + TMA.

10. Verfahren nach Anspruch 8 oder 9, dadurch **gekennzeichnet**, daß der organische Stoff ein Hydroxid oder ein Salz des Tetramethylammoniumions ist.

11. Verfahren nach einem der Ansprüche 8 bis 10, dadurch **gekennzeichnet**, daß die Siliziumquelle ausgewählt wird unter einem Silikat, fester Kieselsäure, kolloidaler Kieselsäure und Kieselsäuresolen und -gelen.

12. Verfahren nach einem der Ansprüche 8 bis 11, dadurch **gekennzeichnet**, daß die Aluminiumquelle ausgewählt wird unter Al-Salzen, metallischem Aluminium, Al-Oxiden, Tonen und synthetischen oder natürlichen Zeolithen.

13. Verfahren nach einem der Ansprüche 8 bis 12, dadurch **gekennzeichnet**, daß die auskristallisierte Phase mit Luft kalziniert wird, um einen synthetischen Zeolith vom Mazzittyp der folgenden stöchiometrischen Zusammensetzung, ausgedrückt in Molen Oxide, zu erhalten:

$$1 \pm 0{,}5\left[(1-x)M\frac{2}{n}O + x\, K_2O\right], Al_2O_3,\ ySiO_2, 0\text{-}20H_2O$$

worin M wenigstens ein austauschbares Alkali- oder Erdalkalikation mit dem Wert n, x 0,1 bis 0,8, vorzugsweise jedoch 0,2 bis 0,5 und y 3 bis 20, vorzugsweise jedoch 4 bis 10, bedeuten, wobei das Röntgenbeugungsdiagramm die in Tabelle 1 aufgeführten Werte aufweist:

## TABELLE 1

| d($10^{-1}$nm) | I/$I_o$x100 | hkl |
|---|---|---|
| 15,47 | 9 | 100 |
| 9,03 | 60 | 110 |
| 7,83 | 15 | 200 |
| 6,82 | 15 | 101 |
| 5,93 | 31 | 210 |
| 5,47 | 3 | 201 |
| 5,24 | 6 | 300 |
| 4,679 | 34 | 211 |
| 4,357 | 5 | 310 + 301 |
| 3,934 | 11 | 400 |
| 3,789 | 100 | 311 + 002 |
| 3,691 | 27 | 102 |
| 3,610 | 35 | 320 |
| 3,501 | 67 | 112 + 401 |
| 3,42 | 13 | 202 + 410 |
| 3,264 | 6 | 321 |
| 3,149 | 85 | 500 + 411 |
| 3,076 | 36 | 302 |
| 3,030 | 32 | 330 |
| 2,975 | 22 | 420 |
| 2,910 | 78 | 501 + 222 |
| 2,826 | 6 | 510 + 331 |
| 2,619 | 18 | 511 |

14. Verfahren nach Anspruch 13, dadurch **gekennzeichnet**, daß die kalzinierte auskristallisierte Phase gegen ein anorganisches Ammoniumsalz ausgetauscht und erneut kalziniert wird, um einen synthetischen Zeolith vom Mazzittyp herzustellen, der folgende stöchiometrische Zusammensetzung, ausgedrückt in Molen Oxide, aufweist:

$1\pm0,5[(1-x)H + xK]_2O$ ,$Al_2O_3$, $ySiO_2$,0-20$H_2O$

worin x 0,1 bis 0,8, vorzugsweise 0,2 bis 0,5, y 3 bis 20, vorzugsweise 4 bis 10 bedeuten, wobei das Röntgenbeugungsdiagramm die in Tabelle 1 aufgeführten Werte aufweist:

## TABELLE 1

| d($10^{-1}$nm) | $I/I_0 \times 100$ | hkl |
|---|---|---|
| 15,47 | 9 | 100 |
| 9,03 | 60 | 110 |
| 7,83 | 15 | 200 |
| 6,82 | 15 | 101 |
| 5,93 | 31 | 210 |
| 5,47 | 3 | 201 |
| 5,24 | 6 | 300 |
| 4,679 | 34 | 211 |
| 4,357 | 5 | 310 + 301 |
| 3,934 | 11 | 400 |
| 3,789 | 100 | 311 + 002 |
| 3,691 | 27 | 102 |
| 3,610 | 35 | 320 |
| 3,501 | 67 | 112 + 401 |
| 3,42 | 13 | 202 + 410 |
| 3,264 | 6 | 321 |
| 3,149 | 85 | 500 + 411 |
| 3,076 | 36 | 302 |
| 3,030 | 32 | 330 |
| 2,975 | 22 | 420 |
| 2,910 | 78 | 501 + 222 |
| 2,826 | 6 | 510 + 331 |
| 2,619 | 18 | 511 |

15. Verfahren nach Anspruch 14, dadurch **gekennzeichnet**, daß das anorganische Ammoniumsalz Ammoniumnitrat ist.

16. Verfahren nach einem der Ansprüche 13 bis 15, dadurch **gekennzeichnet**, daß die Kalzinierungen durch Erwärmung unter Luft bei 500 bis 600°C während ca. 5 Stunden durchgeführt werden.

17. Verwendung eines Zeoliths nach Anspruch 6 in Prozessen zur Umwandlung von Kohlenwasserstoffen wie Kracken, Isomerisierung, Alkylierung, Reforming, Polymerisation, Entparaffinierung oder Hydratisierung.